# EUROPEAN PATENT SPECIFICATION

(11) **EP 3 657 074 B1**
(45) Date of publication and mention of the grant of the patent: **23.06.2021**
(21) Application number: 18208409.5
(22) Date of filing: 26.11.2018
(51) Int. Cl.: F23R 3/28, B22F 5/00, B22F 5/10, B22F 7/08, F02C 7/22, F23D 11/38, B33Y 80/00, B33Y 10/00

(54) **METHOD FOR MANUFACTURING A BURNER LANCE**
VERFAHREN ZUR HERSTELLUNG EINER BRENNERLANZE
PROCÉDÉ DE FABRICATION D'UNE LANCE DE BRÛLEUR

(43) Date of publication of application: 27.05.2020
(73) Proprietor: Ansaldo Energia Switzerland AG, 5401 Baden (CH)
(72) Inventor: MAURER, Michael Thomas, 79713 BAD SAECKINGEN (DE); GAUPP, Christoph, 8050 ZÜRICH (CH); PENNELL, Douglas, 5210 WINDISCH (CH); RUCK, Thomas, 5332 REKINGEN (CH); HÄFLIGER, Roland, 6052 HERGISWIL (CH)
(74) Representative: Martini, Gabriele

(56) References cited:
- EP-A1- 2 957 367
- WO-A1-2015/112385

## Description

### Field of the Invention

The present invention relates to a method for manufacturing a burner lance for a gas turbine for power plants, wherein this burner lance is provided with at least a nozzle for injecting oil (or liquid) fuel, preferably with a plurality of nozzles for injecting oil fuel, gas fuel and carrier air. Usually, the at least an oil fuel nozzle is obtained at the tip of the above burner lance. However, according to the present invention the at least an oil fuel nozzle may be provided in an upstream portion of the tip for allowing a better premixing of the injected oil fuel.

The gas turbine assembly may be provided with a single combustion stage or a two combustion steps in series along the main gas flow. In this last kind of gas turbine, the combustor section comprises a first burner, or premix burner, and a second burner, or reheat burner, wherein the first burner is preferably provided with the above mentioned burner lance manufactured according to the present invention.

### Description of prior art

As known, a gas turbine for power plants (in the following only gas turbine) comprises a rotor provided with an upstream compressor sector, a combustor sector and a downstream turbine sector. The terms downstream and upstream refer to the direction of the main gas flow passing through the gas turbine. In particular, the compressor comprises an inlet supplied with air and a plurality of blades compressing the passing air. The compressed air leaving the compressor flows into a plenum, i.e. a closed volume, and from there into the combustor. Inside the combustor the compressed air is mixed with at least one fuel. The mixture of fuel and compressed air flows into a combustion chamber inside the combustor where this mixture are combusted. The resulting hot gas leaves the combustor and is expanded in the turbine performing work on the rotor.
In order to achieve a high efficiency, a high turbine inlet temperature is required. However, due to this high temperature, high NOx emissions are generated.
In order to reduce these emissions and to increase operational flexibility, today is known a particular kind of gas turbines performing a sequential combustion cycle.

In general, a sequential gas turbine comprises two combustors in series wherein each combustor is provided with the relative burner and combustion chamber. Following the main gas flow direction, the upstream combustor is called "premix" combustor and is fed by the compresses air. The downstream combustor is called "sequential" or "reheat" combustor and is fed by the hot gas leaving the first combustion chamber. According to a first kind of sequential gas turbines, the two combustors are physically separated by a stage of turbine blades, called high pressure turbine.

Following the main gas flow, this first kind of sequential gas turbines comprises a compressor, a first combustor, a high-pressure turbine, a second combustor and a low-pressure turbine. The compressor and the two turbines may be connected to a common rotor rotating around an axis and surrounded by a concentric casing.
Today is known a second kind of sequential gas turbines not provided with the high pressure turbine and wherein the combustor section comprises a plurality of can-shaped combustors arranged as a ring around the turbine axis. Each can combustor is provided with a premix and the reheat combustor arranged directly one downstream the other. Each can-combustor is also provided with a transition duct arranged downstream the second combustion chamber for guiding the hot gas leaving the combustor toward the turbine, in particular toward the first vane of the turbine.

Usually, the premix or first burner comprises a swirler, i.e. a device or a frame portion of the first burner configured for swirling the incoming combustion air. The premix or first burner comprises moreover a lance (or fuel pilot system) centrally arranged with respect to the swirler. This lance comprises a tip provided with a plurality of nozzles configured for injecting in the swirled combustion air a liquid fuel, a gas fuel and carrier air. In view of the above, inside the burner lance a plurality of channels are obtained for feeding the different nozzles with liquid fuel, gas fuel and carrier air. The known methods for manufacturing burner assemblies require complex machining and assembling operations and are not sufficiently flexible and cost-effective. In particular, the shapes obtainable by known methods are limited. Moreover, the burner assemblies obtained by the known methods have a heavy structure requiring an high amount of material.

In order to overcome these manufacturing problems, today it is known to use additive manufacturing methods for producing the burner lance. Indeed, these manufacturing methods allow the realization of complex designs.

However, a burner lance produced by an additive manufacturing method involves others drawbacks. Indeed, a component made by an additive manufacturing method discloses a higher surface roughness than the same component produced by a machining method (for instance the electrical discharge machining method). Therefore, the use of an additive manufacturing method does not allow to obtain an high quality of the fuel injection (in particular liquid fuel injection) in the combustion chamber. In other words, the high surface roughness of the inner walls of the liquid nozzles coming from the additive manufacturing method does not allow to reach the required good quality of the liquid fuel injection in terms of a controlled spray pattern. On the contrary, a good quality of the liquid fuel injection is today required in order to fulfill the low demanding emission and for reducing the required NOx Water addition used for limiting the emission level. In order to overcome this problem, a solution may be first to realize the lance by an additive manufacturing method and after to machine the inner walls of the liquid nozzles to reproduce locally the required low surface roughness. However, this solution is not easy to perform because the portions to be machined (i.e. the inner wall of the liquid nozzles inside the lance tip) are not accessible from the outside. An alternative solution for improving the surface roughness of the inner walls of the liquid nozzles, may consist in preliminary flowing a grinding fluid inside the channels. However, this grinding process cannot be limited to the inner walls of the liquid nozzles and therefore the grinding fluid will change the overall flow characteristics of the entire lance.

WO2015112385 discloses an additively manufactured fuel injector with a separated atomizing tip.

EP2957367 refers to an additive manufacturing method and to the problem of controlling an atomized spray. As a prior art solution, EP2957367 discloses that the atomizer tip may be a machined body brazed or welded to the additive body.

### Disclosure of the invention

Accordingly, a primary object of the present invention is to provide a method for producing a burner lance that are suitable for overcoming the drawbacks of the prior art. In particular, the object of the present invention is to provide a burner lance that form one side is made by an additive manufacturing method and from the other side allows to guarantee an high quality of the liquid fuel injection.

As known, the burner lance is extending between a supply assembly of air, liquid fuel and gas fuel and a tip. The tip, and/or an upstream portion of the tip, is provided with at least a liquid nozzle, preferably with a plurality of gas nozzles, liquid nozzles and air nozzles. Inside the burner lance a liquid fuel duct is provided for connecting the liquid nozzle with the supply assembly. In case of the presence of air and gas nozzles, the burner lance is provided with a gas fuel duct, connecting the gas nozzles with the supply assembly, and an air duct, connecting the air nozzles with the supply assembly. Each liquid nozzle is provided with a nozzle insert realized by a machining method (for instance the electrical discharge machining method) whereas all the remaining portions of the burner lance are realized by an additive manufacturing method (for instance by SLM). In particular, two sequential steps of an additive manufacturing method are separated by an intermediate step of fitting the nozzle inserts in relative seats at the lance tip obtained during the first additive manufacturing step.

With the term "nozzle insert" we mean an insert in form of a shaped sleeve wherein the outer surface is configured for fitting with the above mentioned seats and wherein the inner surface is shaped to reproduce a desired liquid fuel injecting spray pattern.

In other words, the proposed invention provides an hybrid solution of the advantages offered by the additive manufacturing method (i.e. the production of complex designs inside the lance) and by the machining method (i.e. an high surface quality in terms of low surface roughness of the inner walls of the liquid nozzles). Indeed, the machined inner surface of nozzle insert allows to reach a perfect (controlled) spray pattern of the injected liquid fuel. Additionally, the present invention allows to perform a pre-check of the nozzle insert before the installation in the lance. Therefore, the production yield rate is improved.

Moreover, with the term burner lance we may refer also to a limited portion of the lance starting from the tip instead of the entire lance from the tip to the supply assembly. The height of the nozzle insert, i.e. the extension of the insert inside the tip may vary and is depending of the required injecting spray. For instance, the insert may be realized by EDM (electric discharge machining) whereas the remaining portions of the lance may be realized by SLM (laser selective melting).

Preferably, the nozzle insert and all the remaining portions of the burner lance are realized by the same or similar material in order to avoid different thermal expansions. For instance, the nozzle insert and all the remaining portions of the burner lance may be made of nickel base alloy (e.g. Hastelloy-X) or may be produced from stainless steel (preferably in case of lower temperature applications like E-class turbine combustor).

Even if not strictly required, a mechanical locking device may be provided to avoid any falling out of the insert from the relative seat.

As foregoing mentioned, the fuel nozzles may be provided at the tip or at an upstream portion of the tip of the lance. This last case allows to perform a better mixing between the injected liquid fuel and the coming swirled air.

Therefore, the method for manufacturing a burner lance according to the invention comprises the following steps of:
a) providing at least a nozzle insert produced by a machining method wherein the nozzle insert is configured for realizing a liquid fuel injection with an injecting spray pattern;
b) additive manufacturing a first portion of the burner lance starting from the tip up to an intermediate built-height is reached, wherein at each liquid nozzle a through opening is obtained having a size suitable for housing the nozzle insert;
c) fitting the nozzle insert in each through opening realized during the previous step b) at the liquid nozzles;
d) additive manufacturing the remaining portions of the burner lance wherein the base for the first additive layer of this step is the inner portion of the burner lance realized in step b) provided with the nozzle inserts according to the step c).

In case of the liquid nozzles are obtained at the lance tip, the intermediate built-height corresponds to the height of the nozzles. In case of the liquid nozzles are obtained at an upstream portion of the lance tip, the first layers of the tip realized by the first additive step are not provided with any through opening.

Preferably, between the steps b) and c) the method may comprise the step of machining the through opening for improving the coupling with the nozzle inserts.

Preferably, between the steps c) and d) the method may comprise the step of grinding the base for the additive manufacturing step d) for improving the bounding interface.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of a gas turbine for power plants that can be provided with a burner lance manufactured according to the present invention;
- figure 2 is a schematic view of a can combustor for a gas turbine for power plants provided in series with a premix and a reheat burner wherein such premix burner can be provided with a burner lance manufactured according to the present invention;
- figure 3 is a schematic perspective view, with parts in section and parts removed for sake of clarity, of an example of a burner that can be provided with a burner lance manufactured according to the present invention;
- figure 4 is a schematic perspective view, with parts in section and parts removed for sake of clarity, of burner lance manufactured according to the prior art;
- figure 5 is a schematic perspective view, with parts in section and parts removed for sake of clarity, of an example of a burner lance manufactured according to the present invention;
- figures 6a-6c are schematic view of manufacturing steps for producing a burner lance according to the present invention; and
- figure 7 is a schematic view of an embodiment wherein the fuel oil nozzles are not provided at the lance tip but in an upstream portion of the tip along the lance; and
- figure 8 is a schematic view of an alternative embodiment of a burner lance manufactured according to the present invention.

### Detailed description of preferred embodiments of the invention

In cooperation with attached drawings, the technical contents and detailed description of the present invention are described thereinafter according to preferred embodiments, being not used to limit its executing scope. Any equivalent variation and modification made according to appended claims is all covered by the claims claimed by the present invention. Reference will now be made to the drawing figures to describe the present invention in detail.

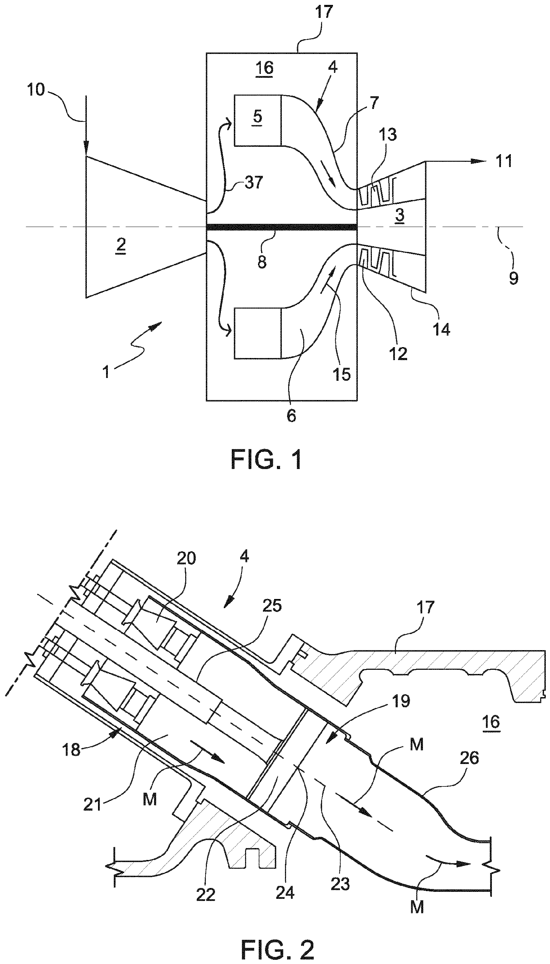

Reference is now made to Fig. 1 that is a schematic view of a gas turbine for power plants that can be provided with a burner lance manufactured according to the present invention. In particular, figure 1 discloses a gas turbine 1 having an axis 9 and comprising a compressor sector 2, a combustor sector 4 and a turbine sector 3. As known, ambient air 10 enters the compressor sector 2 and compressed air leaves the compressor sector 2 and enters in a plenum 16, i.e. a volume define by an outer casing 17. From the plenum 16, the compressed air enters in the combustor sector comprising at least a burner 5 where the compressed air is mixed with at least a fuel. This mixture is then combusted in a combustion chamber 6 and the resulting hot gas 15 flows in a transition duct 7 downstream connected to the turbine 3. As known, the turbine 3 comprises a plurality of vanes 12, i.e. stator blades, supported by a vane carrier 14, and a plurality of blades 13, i.e. rotor blades, supported by a rotor 8. In the turbine 3, the hot gas expands performing work on the rotor 8 and leaves the turbine 3 in form of exhaust gas 11.

Reference is now made to figure 2 that is schematic view of a can combustor. Indeed, the combustor sector 4 of figure 1 can be realized in form of a plurality of can combustors arranged as a ring around the axis 9. According to the example of figure 2, the can combustor 4 is housed in a relative portal hole of an outer casing 17 defining the plenum 16 where the compresses air are delivered by the compressor 2. The can combustor 4 has an axis 24 and comprises in series along the gas flow M a first combustor, or premix combustor 18, and a second combustor, or reheat combustor 19. In particular, the first combustor 18 comprises a first or premix burner 20 and a first combustion chamber 21. The reheat combustor 19 comprises a reheat burner 22 and a second combustion chamber 23. According to the embodiment of figure 2, the fuel is fed to the reheat burner by a central fuel lance 25. Downstream the second combustion chamber 23 the can combustor 4 comprises a transition duct 26 for guiding the hot gas flow to the turbine 3. As foregoing mentioned, the embodiment of figure 2 is only a non-limiting example of a gas turbine that can be provided with a lance manufactured according the present invention.

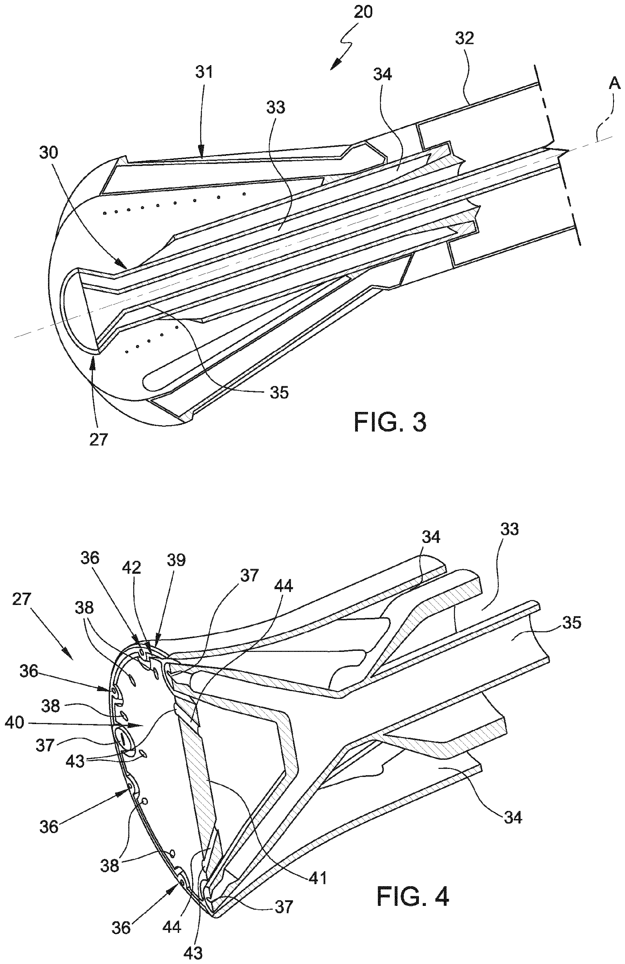

Reference is now made to figure 3 disclosing an example of a premix burner 20 that can be applied in the can combustor of figure 2. This premix burner 20 comprises a burner lance 30 extending along a longitudinal axis A and a conical swirler 31 extending about the burner lance 30. The burner lance 30 and the swirler 31 are coupled to a supply assembly (only schematically represented by the reference 32) which is connected to a respective supply circuit (not illustrated). The burner lance 30 is provided with a gas fuel duct 33 supplied with gas fuel, an air duct 34 supplied with air and with a liquid (or oil) fuel duct 35 supplied with liquid fuel. The burner lance comprises a tip provided with a plurality of gas nozzles, connected with the gas fuel duct 33, a plurality of liquid nozzles, connected with the liquid fuel duct 35, and a plurality of air nozzles connected with air duct 34.

Figure 4 discloses an enlarged view of the lance tip 27 of figure 3 wherein the gas nozzles, the liquid nozzles and the air nozzle are respectively represented by the reference numbers 36 37 and 38. As represented, the lance end tip 27 has preferably a substantially circular section and is provided with an edge 39 and an end surface 40 which is defined by a respective end wall 41 and is preferably planar. Preferably the end wall 41 is configured so as to leave at least one gap 42 between the edge 39 and the end wall 41 which is in communication with the air duct 34. The gas nozzles 36 are arranged substantially equally spaced along a first circular path on the edge 39. In the non-limiting example here described and illustrated, the gas nozzles 36 are eight. The air nozzles 38 are arranged in groups, preferably in four groups each comprising five air nozzles. The groups of air nozzles 38 are equally spaced along a second circular path on the end surface 40 of the end tip 27. Preferably, the second circular path is arranged inside the first circular path. The liquid nozzles 37 are arranged substantially equally spaced along the second circular path preferably in the gap 42. In particular, the liquid nozzles 37 are arranged in recesses of the end surface 40 between the groups of air nozzles 38. The end tip 27 further comprises a plurality of cooling nozzles 43 which are supplied with the air of the air duct 34. These cooling nozzles 43 are arranged substantially equally spaced along a third circular path on the end surface 40. Preferably, the third circular path is arranged inside the second circular path. The cooling nozzles 43 preferably define the exit openings of respective cooling channels 44 obtained in the end wall 41. These cooling channels 44 extends inside the end wall 41 in order to cool the end wall 41 itself. In this way the temperature of the end tip 27 is controlled. The burner lance and in particular la lance tip 27 represented in figure 4 is only an example of a complex design that can be realized by additive manufacturing methods. Indeed, the position and the number of the nozzles may vary from the non-limiting disclosed embodiment shown in the enclosed figures. The definition "additive manufacturing methods" here means all the rapid manufacturing techniques using layer-by-layer constructions or additive fabrication. This definition includes, but it is not limited to, selective laser melting (SLM), selective laser sintering (SLS), Direct Metal Laser Sintering (DMLS), 3D printing (such as by inkjets and laserjets) sterolithography, direct selective laser sintering (DSLS), electron beam sintering (EBS), electron beam melting (EBM) laser engineered net shaping (LENS), laser net shape manufacturing (LNSM) and direct metal deposition (DMD). With the term "layer" hereinafter is intended a layer of material in the form according to the additive manufacturing technique used (approximately between 20-40µm). As known, the method of manufacturing the lance of figure 4 by an additive manufacturing method comprises the following steps:
- determining three dimensional information of the lance to be manufactured;
- converting the three dimensional information into a plurality of cross sectional layers;
- forming the lance 2 by adding each cross sectional layer previously defined starting from the tip towards the supply assembly.

The use of the additive manufacturing method may be limited to only the lance tip or only a limited portion of the lance starting from the tip.

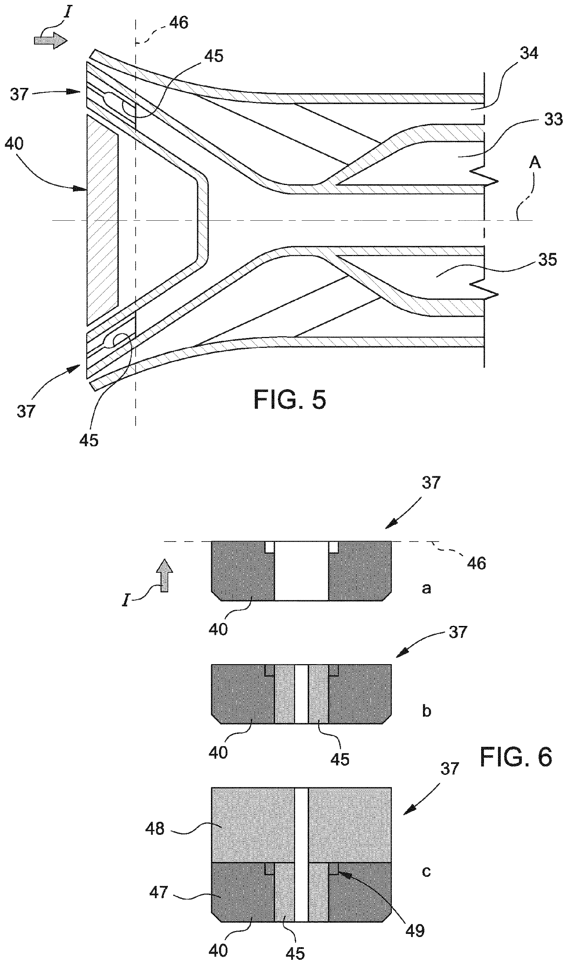

Reference is now made to figure 5 that discloses a lance tip similar to the tip disclosed in figure 4. Indeed, both lances of figure 4 and 5 are realized by additive manufacturing method starting from the free end towards the supply assembly (i.e. according the building direction represented in figure 5 by the arrow I). However, according to the invention each liquid nozzle 37 of figure 5 is provided with an insert 45 in form of a machined body previous produced. In particular, the shape of this insert is configured so that externally can be housed in the last portion of the liquid fuel duct 35 (i.e. a limited portion of the liquid fuel duct starting from the end surface 40). Since the insert is made by a conventional machining method, the surface roughness of the inner surface of the insert itself is very low (for instance a roughness Ra less than 1 µm) and this low surface roughness allows to realize a perfect (controlled) spray pattern of the liquid fuel injected in the combustion chamber. The same nozzle geometry realized by an additive manufacturing method has a roughness Ra between 6 and 20 µm.

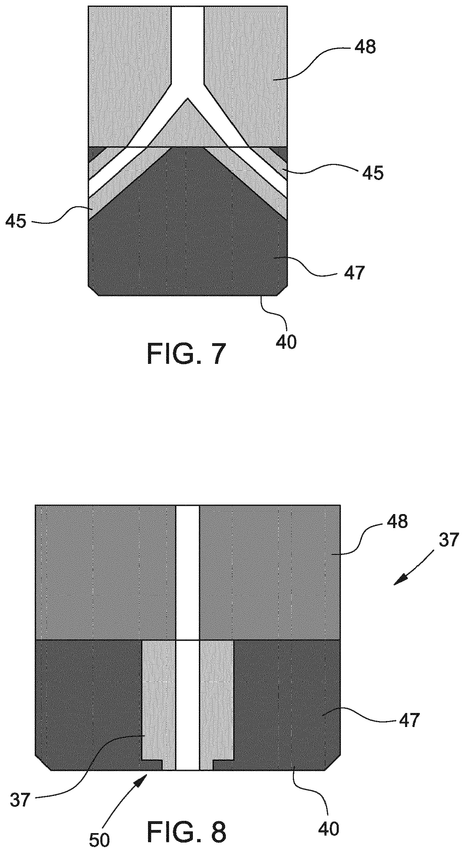

Figures 6a-6c disclose steps of a method according to the invention for producing a lance, or a lance tip, as disclosed in figure 5, i.e. a lance tip realized by an additive manufacturing method with a plurality of liquid nozzles wherein each liquid nozzle is provided with an insert previously realized by a machining method. The first step of the method, schematically represented in figure 6a, is producing part of the lance tip by an additive manufacturing method starting from the end surface 40. For sake of clarity the tip portion represented in figure 6a has been limited to small part of the tip at around a liquid fuel nozzle. According to this first step of the method, a portion of the lance tip is realized by using an additive manufacturing method wherein the tip is realized by superposition of a plurality of layers orthogonal to the building direction I (also represented in figure 5). According to the present invention, this step of addictive manufacturing is however stopped on a particular built-height represented in figure 5 and 6 with the reference 46. At the end of this step each the liquid nozzle 37 comprises a through opening defined by the first portion of the liquid duct 35. Once stopped the addictive manufacturing step on the above mentioned built-height 46, in the through opening the insert 45 is fitted, wherein the inner surface of the insert 45 is configured for realizing a controlled pray pattern of the liquid fuel. As foregoing explained, the insert is previously produced by a machining method that allows to reach a very low surface roughness. Therefore, the second step of the method (schematically represented in figure 6b) comprises the step of fitting the insert in the through opening of the liquid nozzle 37 realized in first step. Once the insert has been fitted in seat, the method comprises the step of restarting with the addictive manufacturing method along the direction I until the tip or the lance is finished. The figure 6c discloses schematically the liquid nozzle 37 at the end of the method wherein the insert 45 is laterally housed in a first body 47 realized during the first step, discloses a free and at the end surface and an opposite end coupled with the second body 48 realized in the last step. Since the first and the second body are realized by the same material and by using the same additive technology, actually the first and the second are integral each other and therefore the insert is kept safe in position. In any case, each liquid nozzle may be provided with an additional mechanical locking device (schematically represented with the reference 49 in figure 6c) for locking in position the insert. According to the invention, the terms "through opening" foregoing mentioned and that refer to the seat for the nozzle insert do not mean necessarily a cylindrical hole. For instance, as disclosed in figure 8, the through opening can be provided with an abutment step 50 on end surface 40 configured for coupling with a corresponding step obtained in the nozzle insert 45. This coupling with the above abutment step 50 may be considered as an alternative of the mechanical locking device 49 disclosed in figure 6.

Finally, figure 7 discloses a schematic view of an embodiment according to present invention wherein two fuel oil nozzles are not provided at the lance tip but in an upstream portion of the tip along the lance. In this example the oil fuel nozzles are inclined with respect to the lance axis. As mentioned in the previous chapter of the present application (summary of invention chapter) the position of the oil fuel nozzles in an upstream portion of the tip allows to perform a better mixing of the injected fuel in the swirled flowing air. According to this example the first layers of the SLM production are realized without any through channels.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention. be understood that many other possible modifications and variations can be made without departing from the scope of the present invention. It is, therefore, contemplated that the appended claim or claims will cover such modifications and variations that fall within the true scope of the invention.

## Claims

1. Method for manufacturing a burner lance, the method comprises the step of:
a) providing at least a nozzle insert produced by a machining method wherein the nozzle insert is configured for realizing a liquid fuel injection with an injecting spray pattern;
b) additive manufacturing a first portion of the burner lance starting from the tip up to an intermediate built-height is reached, wherein at the liquid nozzle a through opening is obtained having a size suitable for receiving the nozzle insert;
c) fitting the nozzle insert in the through opening realized during the previous step at the liquid nozzle;
d) additive manufacturing the remaining portions of the burner lance wherein the base for the first additive layer of this step is the portion of the burner lance realized in step b) provided with the nozzle insert according to the step c) .

2. Method as claimed in claim 1, wherein the liquid nozzle is provided at the tip of the lance and wherein the intermediate built-height of the step a) corresponds to the height of the nozzle insert.

3. Method as claimed in claim 1 or 2, wherein between the steps b) and c) the method comprises the step of machining the through opening.

4. Method as claimed in any one of the foregoing claims from 1 to 3, wherein between the steps c) and d) the method comprises the step of grinding the base for the additive manufacturing step d).

5. Method as claimed as claimed in any one of the foregoing claims from 1 to 4, wherein between the steps c) and d) the method comprises the step of locking the nozzle insert inside the through opening by a interposition of a mechanical locking device.

## Patentansprüche

1. Verfahren zur Herstellung einer Brennerlanze, wobei das Verfahren folgende Schritte umfasst.
a) Bereitstellen mindestens eines Düseneinsatzes, der mithilfe eines maschinellen Bearbeitungsverfahrens hergestellt wurde, wobei der Düseneinsatz dazu bestimmt ist, eine Flüssigbrennstoffeinspritzung mit einem Sprühmuster durchzuführen;
b) additives Herstellen eines ersten Abschnitts der Brennerlanze, beginnend von der Spitze, bis eine Zwischenhöhe erreicht ist, wobei an der Brennstoffdüse eine Durchführungsöffnung ausgebildet wird, die eine geeignete Größe aufweist, um den Düseneinsatz aufzunehmen;
c) Einfügen des Düseneinsatzes in die Durchführungsöffnung, die während des vorherigen Schrittes an der Brennstoffdüse ausgebildet worden ist;
d) additives Herstellen der übrigen Abschnitte der Brennerlanze, wobei die Basis für die erste additive Schicht dieses Schrittes derjenige Abschnitt der Brennerlanze ist, welcher in Schritt b) hergestellt wurde und der mit dem Düseneinsatz gemäß Schritt c) versehen ist.

2. Verfahren nach Anspruch 1, wobei die Brennstoffdüse an der Spitze der Brennerlanze angeordnet ist und die Zwischenhöhe gemäß Schritt a) der Höhe des Düseneinsatzes entspricht.

3. Verfahren nach Anspruch 1 oder 2, wobei das Verfahren zwischen den Schritten b) und c) den Schritt umfasst, in dem die Durchführungsöffnung maschinell gefertigt wird.

4. Verfahren nach einem der vorstehenden Ansprüche 1 bis 3, wobei das Verfahren zwischen den Schritten c) und d) den Schritt umfasst, in dem die Basis für die additive Herstellung in Schritt d) geschliffen wird.

5. Verfahren nach einem der vorstehenden Ansprüche 1 bis 4, wobei das Verfahren zwischen den Schritten c) und d) den Schritt umfasst, in dem der Düseneinsatz mittels einer mechanischen Arretiervorrichtung im Inneren der Durchführungsöffnung arretiert wird.

## Revendications

1. Procédé de fabrication d'une lance de brûleur, le procédé comprenant l'étape suivante :
a) la fourniture d'au moins un insert de buse produit par un procédé d'usinage dans lequel l'insert de buse est conçu pour réaliser une injection de carburant liquide avec une forme du jet d'injection ;
b) la fabrication additive d'une première partie de la lance de brûleur à partir de l'extrémité jusqu'à ce qu'une hauteur de structure intermédiaire soit atteinte, dans lequel au niveau de la buse de liquide une ouverture traversante, ayant une taille adaptée pour recevoir l'insert de buse, est obtenue ;
c) l'introduction de l'insert de buse dans l'ouverture traversante réalisée pendant l'étape précédente au niveau de la buse de liquide ;
d) la fabrication additive des parties restantes de la lance de brûleur dans lequel la base de la première couche additive de cette étape est la partie de la lance de brûleur réalisée à l'étape b) présentant l'insert de buse conformément à l'étape c).

2. Procédé selon la revendication 1, dans lequel la buse de liquide est prévue à l'extrémité de la lance et dans lequel la hauteur de structure intermédiaire de l'étape a) correspond à la hauteur de l'insert de buse.

3. Procédé selon la revendication 1 ou 2, dans lequel entre les étapes b) et c) le procédé comprend l'étape d'usinage de l'ouverture de passage.

4. Procédé selon l'une quelconque des revendications 1 à 3 précédentes, dans lequel entre les étapes c) et d) le procédé comprend l'étape de rectification de la base pour l'étape de fabrication additive d).

5. Procédé selon l'une quelconque des revendications 1 à 4 précédentes, dans lequel entre les étapes c) et d) le procédé comprend l'étape de verrouillage de l'insert de buse à l'intérieur de l'ouverture de passage par l'interposition d'un dispositif de verrouillage mécanique.
